**Europäisches Patentamt**

**European Patent Office**

**Office européen des brevets**

(19)

(11) Veröffentlichungsnummer: **0 325 098**
**A1**

(12) ## EUROPÄISCHE PATENTANMELDUNG

(21) Anmeldenummer: **88890008.1**

(22) Anmeldetag: **18.01.88**

(51) Int. Cl.4: **E04B 2/96 , E06B 3/54 ,
B32B 17/10**

(43) Veröffentlichungstag der Anmeldung:
**26.07.89 Patentblatt 89/30**

(84) Benannte Vertragsstaaten:
**AT BE CH DE ES FR GB GR IT LI LU NL SE**

(71) Anmelder: **Eckelt, Josef**
**Saass 56**
**A-4421 Aschach(AT)**

(72) Erfinder: **Eckelt, Josef**
**Saass 56**
**A-4421 Aschach(AT)**

(74) Vertreter: **Hübscher, Heiner, Dipl.-Ing. et al**
**Spittelwiese 7**
**A-4020 Linz(AT)**

(54) Verglasung mit einer Verbundscheibe und Verfahren zum Herstellen einer solchen Verbundscheibe.

(57) Eine Verglasung (1) weist eine Verbundscheibe (2) auf, die aus wenigstens zwei miteinander verbundenen Einzelscheiben (3, 3a) besteht und flächenbündig in eine Halterung (4) eingesetzt ist.

Um auf rationelle Weise eine sichere Scheibenhalterung zu erreichen und eine Beeinträchtigung der Scheibenfestigkeitseigenschaften zu vermeiden, springt die Außenscheibe (3a) der Verbundscheibe (2) an zumindest zwei einander gegenüberliegenden Seitenrändern zurück und ein den Seitenrand umgreifender Halteschenkel (4a) der Halterung (4) ragt in den entstehenden Randfalz (5) vor, wobei die Stärke des Halteschenkels (4a) höchstens der Falztiefe entspricht.

FIG.1

EP 0 325 098 A1

# Verglasung mit einer Verbundscheibe und Verfahren zum Herstellen einer solchen Verbundscheibe

Die Erfindung bezieht sich auf eine Verglasung mit einer Verbundscheibe, die aus wenigstens zwei miteinander verbundenen Einzelscheiben besteht und flächenbündig in eine Halterung eingesetzt ist, sowie auf ein Verfahren zum Herstellen einer Verbundscheibe für diese Verglasung.

Das flächenbündige Einsetzen von Scheiben aus Glas oder Kunststoff gewinnt immer mehr an Bedeutung, um beispielsweise im Fassadenbau eine Glasverkleidung mit möglichst unsichtbaren Halterungs- und Konstruktionsteilen und kleinsten Fugen zwischen den Scheiben zu erreichen, um Fassadenreinigungsarbeiten nicht durch vorstehende Metall- und Halterungsteile zu behindern, um beim Abfließen von Regenwasser Schmutzstreifen verursachende Abtropfstellen an vorstehenden Metallteilen zu beseitigen, oder um im Fahr- und Flugzeugbau aus aerodynamischen Gründen mit den Halterahmen ebenflächige Verglasungen zu erzeugen, oder auch nur der Optik und Ästhetik wegen. Zum Herstellen solcher ebenflächiger Verglasungen werden bisher die Scheiben mit Adhäsionsklebern, vorzugsweise Silikonkautschuk, in einen Falz der Halterung eingeklebt, wodurch allerdings die Gefahr eines Lösens des Klebers und eines Herausfallens der Scheiben besteht. Gemäß der AT-PS 279.186 wurde auch schon vorgeschlagen, die Scheiben randseitig abzuschrägen und in Haltenuten mit entsprechend auswärts geneigten Flanken einzusetzen, was zwar zu einer sicheren mechanischen Halterung der Scheiben führt, aber eine bestimmte Scheibendicke voraussetzt. Darüber hinaus gibt es auch schon Verglasungen, deren Scheiben stirnseitig eingeschliffene Nuten aufweisen, in die geeignete Halter der Haltekonstruktion eingreifen. Das Einschleifen der Nuten bringt jedoch, bedingt durch die auftretende Kerbwirkung, eine statische Schwächung der Scheiben mit sich, die schwer zu beherrschen ist und bei Belastung den Bruch der Scheiben befürchten läßt.

Der Erfindung liegt daher die Aufgabe zugrunde, diese Mängel zu beseitigen und eine Verglasung der eingangs geschilderten Art zu schaffen, die sich rationell aufbauen läßt, eine sichere Halterung der Scheiben gewährleistet und eine Beeinträchtigung der Scheibenfestigkeit ausschließt. Außerdem soll ein Verfahren angegeben werden, nach dem die zu verglasenden Verbundscheiben einfach und zweckmäßig herstellbar sind.

Die Erfindung löst diese Aufgabe dadurch, daß die Verbundscheibe eine an zumindest zwei einander gegenüberliegenden Seitenrändern zurückspringende Außenscheibe aufweist und ein den Seitenrand umgreifender Halteschenkel od. dgl. der Halterung in den entstehenden Randfalz vorragt, wobei die Stärke des Halteschenkels höchstens der Falztiefe entspricht. Das Zusammenwirken von Randfalz und Halteschenkel garantiert eine sichere mechanische Scheibenbefestigung ohne die Notwendigkeit einer Kerbverletzung der Scheiben, insbesondere der tragenden Einzelscheibe der Verbundscheiben, wobei der Randfalz allein durch die entsprechend kleinformatigere Außenscheibe entsteht. Diese Randfalze können daher bei jeder beliebigen Verbundscheibe vorbereitet werden, seien es Verbundsicherheitsgläser, Glaspaneele mit Isolation und Blechdeckschale, Isoliergläser, Panzergläser u. dgl., welche Verbundscheiben sich daher auch alle flächenbündig in Fensterrahmen, Metallkonstruktionen, Karosserie- und Kabinenteilen u. dgl. einsetzen lassen, so daß die erfindungsgemäße Verglasung sowohl für den Fassadenbau als auch für den Fahr- und Flugzeugbau, den Seilbahnbau u. dgl. geeignet ist.

Zur Herstellung von Verbundscheiben gibt es heute im wesentlichen zwei Verfahren, nämlich das Klebefolienverfahren, bei dem die Einzelscheiben unter Zwischenlage einer Klebefolie, vorzugsweise einer Polyvinylbutyralfolie, in einem Heißluftautoklaven durch Aufheizen und Verpressen zusammengeklebt werden, oder das Gießharzverfahren, bei dem der Zwischenraum zwischen den durch eine randseitig eingelegte Dichtschnur abgedichteten Einzelscheiben mit Gießharz befüllt und die Verbindung der Einzelscheiben durch die Polymerisation bzw. Aushärtung des Gießharzes zustandekommt.

Wird nun bei der Herstellung der Verbundscheibe nach dem Klebefolienverfahren eine der Einzelscheiben auf ein gegenüber der Verbundscheibengröße kleineres Format zugeschnitten und mittig ausgerichtet als Außenscheibe auf die anderen der Verbundscheibengröße entsprechend zugeschnittenen und bereits mit Klebefolie belegten Einzelscheiben aufgebracht, wobei zur Lagefixierung in den verbleibenden Randfalz Distanzleisten eingesetzt werden, entsteht praktisch ohne Mehraufwand eine für die erfindungsgemäße Verglasung geeignete, mit einem Randfalz versehene Verbundscheibe. Die in dem Randfalz eingelegten Distanzleisten verhindern beim Laminier- bzw. Heiz- und Preßvorgang ein Verrutschen der kleineren Scheibe gegenüber den anderen Scheiben, so daß ein exakter Randfalzverlauf sichergestellt ist.

Bei der Herstellung im Gießharzverfahren werden hingegen zur Gießharzbefüllung der Scheibenzwischenräume nur ein der Verbundscheibengröße angepaßtes Format aufweisende Einzelscheiben verwendet, worauf erst nach dem Erhärten des eingefüllten Gießharzes von der Außenscheibe dem Randfalz entsprechende Randstreifen abgeschnitten und zusammen mit dem anhaftenden Gießharz und der Dichtschnur entfernt werden. Da für das Gießharzbefüllen alle Einzelscheiben gleich groß sind, gibt es keine Schwierigkeiten hinsichtlich der Abdichtung mit der Dichtschnur oder der ordnungsgemäßen Befüllung mit Gießharz, so daß die Herstellung eines qualitativ einwandfreien Verbundglases gewährleistet ist. Durch das nachträgliche Entfernen entsprechender Randstreifen samt der Gießharzbeschichtung und der Dichtschnur dieses Bereiches ergibt sich dann wiederum der gewünschte Randfalz, ohne dadurch den Herstellungsaufwand wesentlich zu erhöhen oder die Festigkeitseigenschaften des Verbundglases zu beeinträchtigen.

In der Zeichnung ist der Erfindungsgegenstand näher veranschaulicht, und zwar zeigen

Fig. 1 und 2 zwei Ausführungsbeispiele einer erfindungsgemäßen Verglasung im Querschnitt,

Fig. 3 und 4 zwei weitere Beispiele von für eine erfindungsgemäße Verglasung geeigneten Verbundscheiben ebenfalls im Schnitt und

Fig. 5 und 6 die Herstellung einer erfindungsgemäßen Verbundscheibe nach zwei verschiedenen Verfahren im Schema.

Um eine möglichst ebenfläche Verlasung 1 mit Verbundscheiben 2 zu erreichen und diese aus wenigstens zwei miteinander verbundenen Einzelscheiben 3, 3a bestehenden Verbundscheiben 2 flächenbündig ohne Beeinträchtigung ihrer Festigkeitseigenschaften in eine Halterung 4 einsetzen zu können, weist die Verbundscheibe 2 eine an den Seitenrändern zurückspringende Außenscheibe 3a auf, so daß ein Randfalz 5 entsteht, in den ein in seiner Dicke an die Falztiefe angepaßter Halteschenkel 4a der Halterung eingreift. Je nach Verglasung kann der Randfalz 5 an nur zwei gegenüberliegenden Seiten, an mehreren Seiten oder auch umlaufend vorhanden sein, und auch die Halteschenkel 4a lassen sich je nach Erfordernis als durchgehende Halteleisten, als einzelne Pratzen, Klammern od. dgl. ausbilden. Die Halteschenkel 4a fügen sich ohne über die Oberfläche der Außenscheibe 3a vorzuragen in den Randfalz 5 ein, so daß eine einfache Montage der Verglasung 1 möglich wird und darüber hinaus auch eine sichere mechanische Halterung für die Verbundscheiben 2 gewährleistet ist. Zur Anpassung der Halterung 4 an die Verbundscheiben 2, zum Schutz der Verbundscheibenränder, zur Abdichtung der Fugen usw. können die bei Verglasungen bekannten Maßnahmen, wie Auflagerleisten 7, Dicht- bzw. Klebematerialfüllungen 7a u. dgl., ohne Einschränkung auch bei dieser Verglasung 1 verwendet werden.

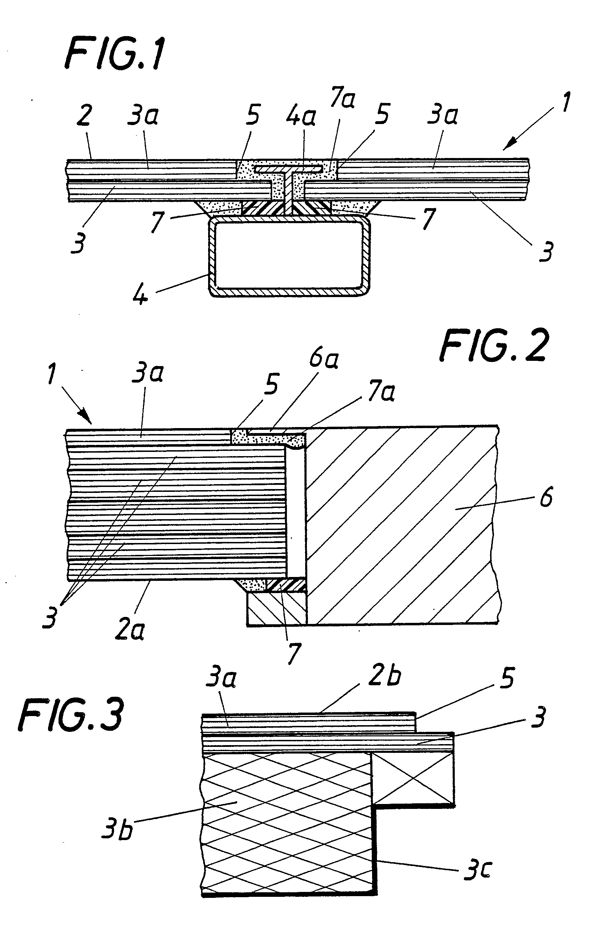

Für den Einsatz bei einer erfindungsgemäßen Verglasung 1 eignen sich verschiedenartigste Verbundscheiben, beispielsweise eine einfache, aus zwei Einzelscheiben 3, 3a bestehende Verbundscheibe 2 (Fig. 1), ein aus mehreren Einzelscheiben 3, 3a zusammengesetztes Panzerglas 2a (Fig. 2), ein aus Einzelscheiben 3a und 3 sowie einer Isolierschicht 3b und einer Blechschale 3c bestehendes Fassadenpaneel 2b (Fig. 3) oder ein aus den Einzelscheiben 3a, 3 und einem Isolierelement 3d kombiniertes Verbund-Isolierglas 2c usw. Zur Halterung der verschiedenen Verbundscheiben sind auch verschiedenste Konstruktionen verwendbar, beispielsweise kann die Halterung 4 als Teil einer Fassadenkonstruktion (Fig. 1) vorgesehen sein oder es kann auch ein Teil einer Fahrzeugkarosserie die Halterung 6 mit einem in den Randfalz 5 vorragenden Halteschenkel 6a (Fig. 2) bilden, so daß die Verglasung 1 sowohl im Fassadenbau als auch im Fahrzeug-, Flugzeug- und Seilbahnbau einsetzbar ist.

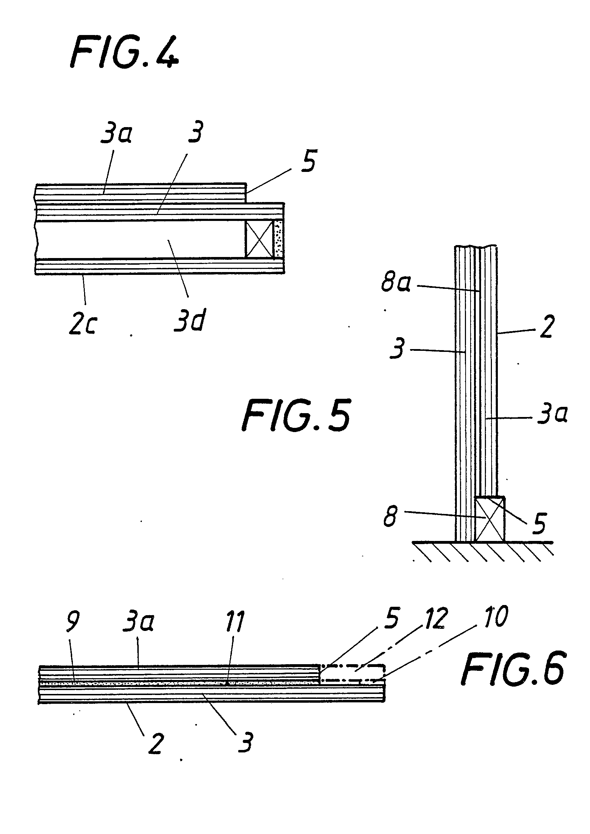

Zur Herstellung der mit dem Randfalz 5 versehenen Verbundscheiben gibt es recht einfach durchzuführende Verfahren. Werden, wie in Fig. 5 angedeutet, die Einzelscheiben 3, 3a unter Zwischenlage einer Klebefolie 8a zur Verbundscheibe verklebt, braucht lediglich die Außenscheibe 3a auf ein entsprechend kleineres Format zugeschnitten und dann mittig ausgerichtet auf die andere bereits mit der Klebefolie 8a belegte Einzelscheibe 3 aufgebracht und verpreßt zu werden, um die Verbundscheibe 2 mit ihrem Randfalz 5 entstehen zu lassen. Um beim Verpressen der Scheiben 3, 3a ein gegenseitiges Verrutschen der Scheiben 3, 3a zu verhindern, wird in den Randfalz 5 eine Distanzleiste 8 eingesetzt, so daß eine ordnungsgemäße Verbundscheibenherstellung mit exaktem Randfalzverlauf erfolgt.

Wird, wie in Fig. 6 angedeutet, die Verbundscheibe 2 im Gießharzverfahren hergestellt, werden gleich große Einzelscheiben 3, 3a zusammengefügt und der Zwischenraum 9 nach Abdichtung durch eine randseitig eingelegte Dichtschnur 10 mit Gießharz 11 befüllt, worauf erst nach dem Aushärten des Gießharzes 11 ein dem Randfalz 5 entsprechender Randstreifen 12 von der Außenscheibe 3a abgeschnitten und zusammen mit den zugehörigen Teilen des Gießharzes und der Dichtschnur entfernt wird.

Auf rationelle Weise entsteht so eine Verbundscheibe mit Randfalz, ohne daß dabei die Festigkeitseigenschaften vor allem der tragenden Einzelscheiben durch Kerbwirkungen u. dgl. beeinträchtigt würde. Die statische Berechnung der Verbundscheibe kann sich daher durchaus auf bekannte Faktoren stützen, was die genaue Dimensionierung der Verbundscheiben und der Halterungen in Abhängigkeit von den auftretenden oder zu erwartenden Belastungen erlaubt.

**Ansprüche**

1. Verglasung (1) mit einer Verbundscheibe (2, 2a, 2b, 2c), die aus wenigstens zwei miteinander verbundenen Einzelscheiben (3, 3a, 3b, 3c, 3d) besteht und flächenbündig in eine Halterung (4, 6) eingesetzt ist, dadurch gekennzeichnet, daß die Verbundscheibe (2, 2a - c) eine an zumindest zwei einander gegenüberliegenden Seitenrändern zurückspringende Außenscheibe (3a) aufweist und ein den Seitenrand umgreifender Halteschenkel (4a, 6a) od.dgl. der Halterung (4, 6) in den entstehenden Randfalz (5) vorragt, wobei die Stärke des Halteschenkels (4a, 6a) höchstens der Falztiefe entspricht.

2. Verfahren zum Herstellen einer Verbundscheibe (2) für die Verglasung (1) nach Anspruch 1, nach dem die Einzelscheiben (3, 3a) unter Zwischenlage einer Klebefolie (8a), wie eine Polyvinylbutyralfolie, zur Verbundscheibe (2) zusammengeklebt werden, dadurch gekennzeichnet, daß eine der Einzelscheiben (3a) auf ein gegenüber der Verbundscheibengröße kleineres Format zugeschnitten und mittig ausgerichtet als Außenscheibe auf die anderen der Verbundscheibengröße entsprechend zugeschnittenen und bereits mit Klebefolie (8a) belegten Einzelscheiben (3) aufgebracht wird, wobei zur Lagefixierung in den verbleibenden Randfalz (5) Distanzleisten (8) eingesetzt werden.

3. Verfahren zum Herstellen einer Verbundscheibe (2) für die Verglasung (1) nach Anspruch 1, nach dem der Zwischenraum (9) zwischen den durch eine randseitig eingelegte Dichtschnur (10) abgedichteten Einzelscheiben (3, 3a) mit Gießharz (11) befüllt wird, dadurch gekennzeichnet, daß zur Gießharzbefüllung der Scheibenzwischenräume (9) nur ein der Verbundscheibengröße angepaßtes Format aufweisende Einzelscheiben (3, 3a) verwendet werden, worauf erst nach dem Erhärten des eingefüllten Gießharzes (11) von der Außenscheibe (3a) dem Randfalz (5) entsprechende Randstreifen (12) abgeschnitten und zusammen mit dem anhaftenden Gießharz und der Dichtschnur entfernt werden.

EP 0 325 098 A1

FIG.1

FIG.2

FIG.3

# FIG.4

3a  3  5

2c  3d

# FIG.5

8a

3

8

2

3a

5

# FIG.6

9  3a  11  5  12  10

2  3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-2 576 392 (DOWNES) * Spalte 1, Zeile 55 - Spalte 2, Zeile 34; Figur 2 * | 1 | E 04 B 2/96 E 06 B 3/54 B 32 B 17/10 |
| A | | 2 | |
| X | FR-A-2 102 239 (TRIPLEX SAFETY GLASS CO.) * Seite 3, Zeilen 5-15, Zeile 30 - Seite 4, Zeile 14; Figur 1 * | 1 | |
| A | | 2 | |
| X | FR-A-1 533 601 (TRIPLEX SAFETY GLASS CO.) * Seite 2, Zeilen 9-17, linke Spalte; Seite 2, rechte Spalte, Zeilen 50-55; Figuren 1,4 * | 1 | |
| A | | 2 | |
| A | FR-A-2 360 527 (FRANZ XAVER BAYER ISOLIERGLASFABRIK) * Seite 7, Zeile 15 - Seite 8, Zeile 18; Figuren * | 3 | |
| E | DE-A-3 624 491 (HUECK) * Spalte 5, Zeile 7 - Spalte 7, Zeile 17; Figuren * | 1 | |

**RECHERCHIERTE SACHGEBIETE (Int. Cl.4)**

E 04 B
E 06 B
B 32 B

Der vorliegende Recherchenbericht wurde für alle Patentansprüche erstellt

| Recherchenort | Abschlußdatum der Recherche | Prüfer |
|---|---|---|
| DEN HAAG | 12-09-1988 | LAUE F.M. |